(19) **Europäisches Patentamt**

**European Patent Office**

**Office européen des brevets**

(11) **EP 1 396 942 A2**

(12) **EUROPEAN PATENT APPLICATION**

(43) Date of publication:
**10.03.2004 Bulletin 2004/11**

(51) Int Cl.⁷: **H04B 1/40**, H04B 1/16

(21) Application number: **03255543.5**

(22) Date of filing: **05.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **06.09.2002 KR 2002053823**

(71) Applicant: **SAMSUNG ELECTRONICS CO., LTD.**
**Suwon-City, Kyungki-do (KR)**

(72) Inventors:
• **Kim, Hoon-tae**
**Yongin-city Kyungki-do (KR)**
• **Cho, Gea-ok, 501-1301 Jinsan Maeul**
**Suji-eub Yongin-city Kyungki-do (KR)**

(74) Representative: **Ertl, Nicholas Justin**
**Elkington and Fife,**
**Prospect House,**
**8 Pembroke Road**
**Sevenoaks, Kent TN13 1XR (GB)**

(54) **Multiband transmitting and receiving apparatus**

(57)     There is provided a multiband RF transmitting and receiving apparatus and a method therefor, which is capable of using a control voltage from a phase locked loop (PLL), to other components as well as a voltage controlled oscillator (VCO) of a multiband RF transceiver. The multiband transmitting and receiving apparatus adjusts the capacitance value of a varactor in a power amplifier (PA) and a low noise amplifier (LNA) including an LC parallel resonance circuit, respectively, using the control voltage from the PLL, and controls a current flowing to a mixer. Therefore, the components in the multiband RF transceiver can operate a greater number of frequency bands than one frequency band, which reduces the number of required components upon designing the multiband RF transceiver.

**FIG. 9**

**Description**

BACKGROUND OF THE INVENTION

The present invention relates to a multiband transmitting and receiving apparatus and method, and more particularly to a multiband RF transmitting and receiving apparatus and method that are capable of using a control voltage from a phase locked loop, to other components as well as to a voltage controlled oscillator (VCO) of a multiband RF transceiver.

Recently, since various wireless communication services coexist, cellular phones capable of operating at dual-band or at tri-band have been actively researched. Unlike single-band cellular phones operating at only one frequency band, dual-band cellular phones can operate at two frequency bands (for example, 900 MHz and 1800 MHz), and tri-band cellular phones can operate at three frequency bands.

Efforts have already been made to combine together various wireless communication devices. Producers of such wireless communication devices are required to manufacture products capable of operating at various frequency bands in order to satisfy the demands of users wanting more functions. Also, to reduce size and manufacturing cost, components used in such wireless communication devices need to operate at a number of different frequency bands. Therefore, there is now a demand for technology that can be used to combine IMT-2000, W-PAN (Wide band - Private Area Network), W-LAN (Wide band - Local Area Network), etc., and for a single chip set capable of providing various services using only essential components.

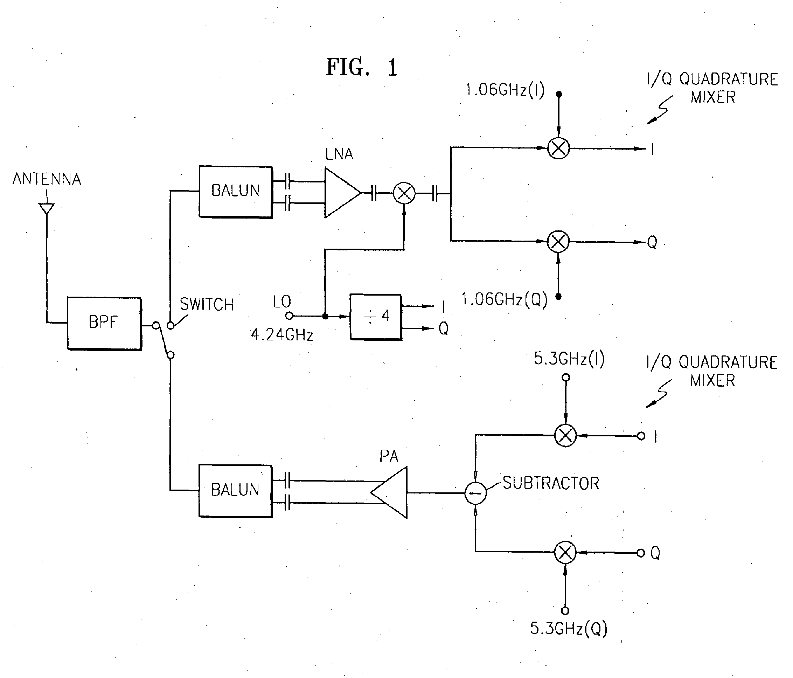

FIG. 1 shows the structure of a step-down transceivers developed by Atheros Corp., which operates according to a conventional technique.

Referring to FIG. 1, U.S. Patent No. 6, 351, 502, owned by Atheros Corp. which manufactures wireless LAN products for use in the 5 GHz frequency band, discloses a method of converting the oscillation frequency of a VCO into 4.25 GHz, dividing the converted frequency by four, and then mixing the dividing frequency, in order to reduce the leakage signal of a local oscillator (LO) generated when a direct conversion structure is adopted in a receiving terminal.

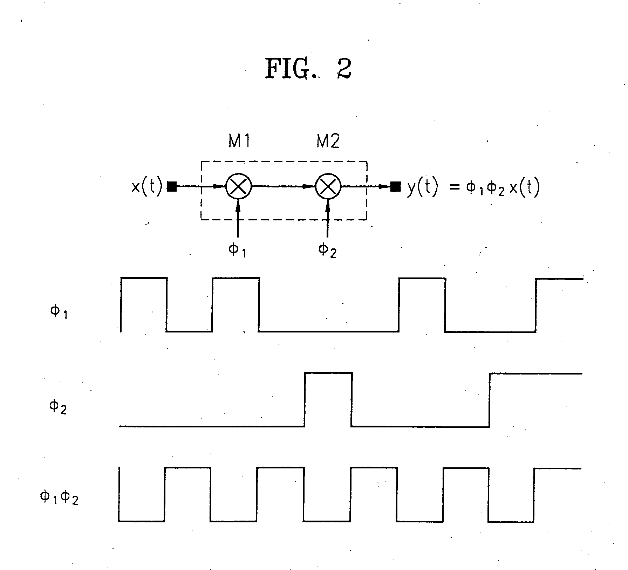

FIG. 2 shows a mixer used in a direct conversion receiver, which operates according to a conventional technique.

Referring to FIG. 2, Europe Patent Publication No. 1,208,651 discloses a method which solves the leakage problem of the local oscillator (LO) by changing the oscillation waveform of the VCO. When a mixer such as the one shown in FIG. 2 is used in the transmitting and receiving terminals, the mixer does not operate at multiple bands, but at a wide band. That is, the mixer does not operate at certain specific frequency bands.

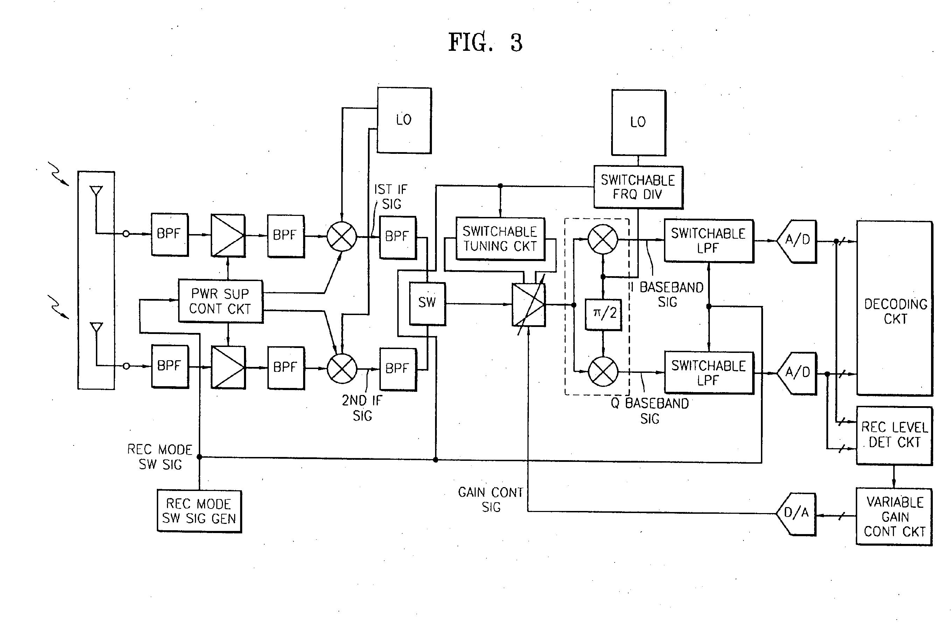

FIG. 3 shows the structure of a transceiver for a multiband mobile terminal using a switch, which operates according to a conventional technique.

Generally, in such transmitting and receiving apparatuses capable of operating at multiple bands, the number of components required in the transmitting and receiving apparatus can be reduced by making the components share one same input frequency. Any components that cannot share one same operating frequency must be designed differently. These differently designed components are selected through a switch, which varies the path through which a signal is passed.

U.S. Patent No. 6,014,571 owned by Matsushita Corp. discloses a transceiver for a multiband cellular terminal, which has a structure capable of controlling a frequency divider, a low pass filter, etc. using a switch.

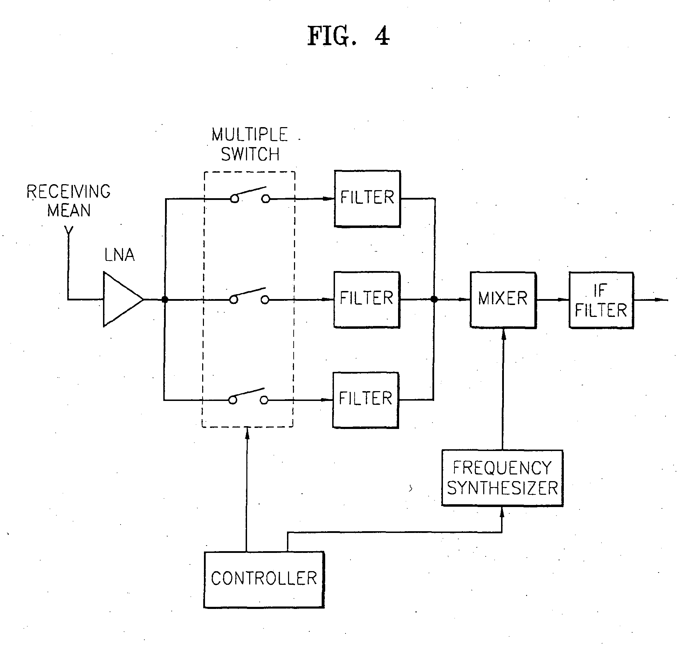

FIG. 4 shows the structure of a band-pass filter using a switch, which operates according to a conventional technique.

Referring to FIG. 4, Europe Patent Publication No. 1,006,669 owned by Boach Corp. discloses a method of operating a low noise amplifier (LNA) at a wide band and controlling a band-pass filter to accommodate various frequency bands using a switch. When the band-pass filter is controlled using the switch, if one or more blocks can not share the same operating frequency, a number of filters equal to the number of frequency bands received by a receiving terminal is additionally required.

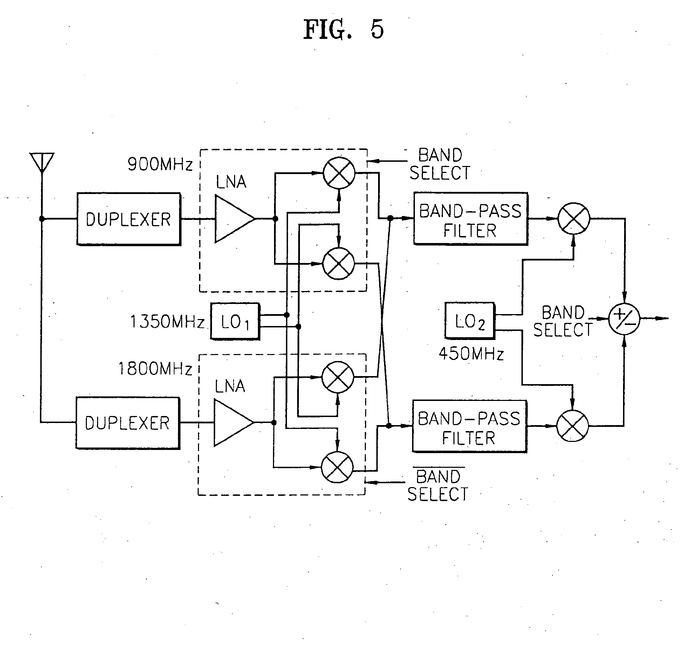

FIG. 5 shows the structure of a dualband receiver using one voltage controlled oscillator (VCO), which operates according to a conventional technique.

Referring to FIG. 5, after a signal passes through the LNA, it is mixed with a signal from a local oscillator (LO) of 1.35 GHz. Since both signals have different frequency bands, a signal having an intermediate frequency (IF) of 450 MHz is produced. This enables both signals having different frequency bands to share one mixer.

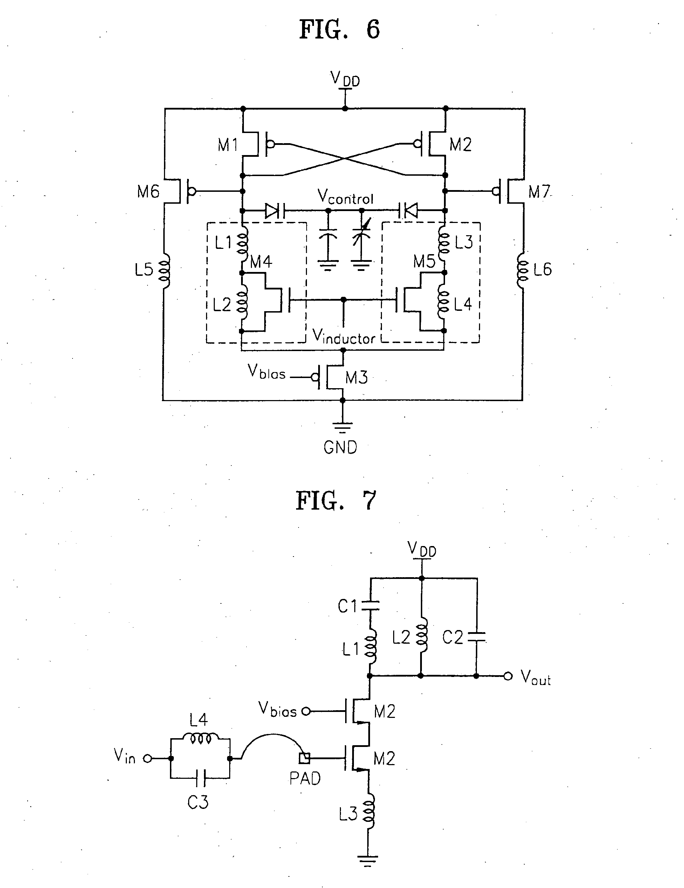

FIG. 6 shows the structure of a dualband VCO using a switch, which operates according to a conventional technique.

Referring to FIG. 6, a VCO has a structure in which two different inductors are interconnected in order to oscillate at two different frequencies.

FIG. 7 shows the structure of a dual-band low noise amplifier (LNA) using serial and parallel resonance, which operates according to a conventional technique.

Referring to FIG. 7, a load of the LNA has a desired property at different frequency bands specified in 802.11 a and 802.11 b, and the load is composed of a serial and parallel LC resonance circuit.

The conventional techniques described above are either not capable of operating at multiple bands or capable of operating at different frequency bands using a switch. However, the conventional techniques are complicated and can only be performed with very complicated structures.

SUMMARY OF THE INVENTION

According to an aspect of the present invention, there is provided a multiband receiving apparatus comprising: a phase locked loop which receives a reference frequency signal and a signal output from a voltage controlled oscillator and generates a control voltage for controlling the frequency of the signal output from the voltage controlled oscillator; a low noise amplifier which receives the control voltage, operates at a frequency band that is adjusted by the control voltage, and amplifies a received signal without amplifying a noise signal in the received signal; and a down mixer including a plurality of transistors, which receives the control voltage, controls an input voltage applied to the gate of a transistor acting as a source among the transistors, operates at a frequency band that is adjusted by the control voltage, and converts the amplified signal into a low-frequency band signal.

According to another aspect of the present invention, there is provided a multiband transmitting apparatus comprising: a phase locked loop which receives a reference frequency signal and a signal output from a voltage controlled oscillator and generates a control voltage for controlling the frequency of the signal output from the voltage controlled oscillator; an up mixer which includes a plurality of transistors, receives the control voltage, controls an input voltage applied to a gate of a transistor operating as a source among the transistors, operates at a frequency band, and converts a transmitting signal into a high-frequency band of signal; and a power amplifier which receives the control voltage, operates with a gain that is adjusted by the control voltage, and amplifies the converted signal by the adjusted gain.

According to still another aspect of the present invention, there is provided a multiband transmitting and receiving apparatus comprising: a phase locked loop which receives a reference frequency signal and a signal output from a voltage controlled oscillator and generates a control voltage for controlling the frequency of the signal output from the voltage controlled oscillator; a low noise amplifier which receives the control voltage, operates at a frequency band that is adjusted by the control voltage, and amplifies a received signal without amplifying a noise signal in the receiving signal; a down mixer including a plurality of transistors, which receives the control voltage, controls an input voltage applied to the gate of a transistor acting as a source among the transistors, operates at a frequency band that is adjusted by the control voltage, and converts the amplified signal into a low-frequency band signal; an up mixer including a plurality of transistors, which receives the control voltage, controls an input voltage applied to the gate of a transistor acting as a source among the transistors, operates at a frequency band that is adjusted by the control voltage, and converts a transmitting signal into a high-frequency band signal; and a power amplifier which receives the control voltage, operates with a gain that is adjusted by the control voltage and amplifies the converted signal by the adjusted gain.

According to still yet another aspect of the present invention, there is provided a data receiving method, which is implemented on multiple frequency bands, comprising: (a) receiving a signal; (b) receiving a reference frequency signal and a signal output from a voltage controlled oscillator and controlling a control voltage which controls the frequency of the signal output from the voltage controlled oscillator; (c) receiving the control voltage, adjusting an operating frequency band, operating at the adjusted frequency band, and amplifying a received signal without amplifying a noise signal in the received signal; and (d) receiving the control voltage, controlling an input voltage applied to a gate of a transistor operating as a source using the control voltage to adjust an operating frequency band, operating at the adjusted frequency band, and converting the amplified signal into a low-frequency band signal.

According to further aspect of the present invention, there is provided a data transmitting method, which is implemented on multiple frequency bands, comprising: (a) receiving a signal; (b) receiving a reference frequency signal and a signal output from a voltage controlled oscillator and generates a control voltage which controls the frequency of the signal output from the voltage controlled oscillator; (c) receiving the control voltage, controlling an input voltage applied to a gate of a transistor operating as a source using the control voltage to adjust an operating frequency band, operating at the adjusted frequency band, and converting the received signal into a high-frequency band signal; and (d) receiving the control voltage to adjust the gain and amplifying the converted signal by the adjusted gain.

The present invention thus provides a multiband RF transmitting and receiving apparatus and method that are capable of using a control voltage created by a phase locked loop (PLL), provides different components and provides a voltage controlled oscillator (VCO) for use in a multiband RF transceiver.

That is, the control voltage output from the PLL can be applied to a low noise amplifier (LNA), a mixer, and a power amplifier (PA) as well as to the VCO, which allows these components to operate at more than one frequency band. Therefore, it is possible to reduce the number of required components in the multiband RF transceiver.

BRIEF DESCRIPTION OF THE DRAWINGS

The above and other features and advantages of the present invention will become more apparent by describing in detail exemplary embodiments thereof with reference to the attached drawings in which:

FIG. 1 shows the structure of a step-down transceiver, developed by Atheros Corp., which operates according to a conventional technique;

FIG. 2 shows a mixer using a structure of a direct conversion receiver, and input and output waveforms to/from the mixer, which operates according to a conventional technique;

FIG. 3 shows the structure of a transceiver for a multiband cellular terminal using a switch, which operates according to a conventional technique;

FIG. 4 shows the structure of a band pass filter using a switch, which operates according to a conventional technique;

FIG. 5 shows the structure of a dual-band receiver using one voltage controlled oscillator (VCO), which operates according to a conventional technique;

FIG. 6 shows the structure of a dual-band VCO using a switch, which operates according to a conventional technique;

FIG. 7 shows the structure of a dual-band low noise amplifier (LNA) using a serial and parallel resonance, which operates according to a conventional technique;

FIG. 8a is a block diagram showing the structure of a receiver that uses an output signal from a PLL to respective components thereof, in a multiband transmitting and receiving apparatus, which operates according to the present invention;

FIG. 8b is a block diagram showing the structure of a transmitter that uses an output signal from a PLL to respective components thereof, in the multiband transmitting and receiving apparatus, which operates according to the present invention;

FIG. 9 is a block diagram showing the structure of an RF transmitting and receiving apparatus that uses an output signal of a PLL to respective components thereof, which operates according to the present invention;

FIG. 10 is a block diagram showing the structure of the PLL used in the present invention;

FIG. 11 is a circuit diagram of a VCO used in the present invention;

FIG. 12 shows the structure of a LNA used in the present invention;

FIG. 13 shows the structure of a power amplifier (PA) used in the present invention;

FIG. 14 shows the structure of a mixer used in the present invention;

FIG. 15 is a circuit diagram showing an embodiment of the LNA used in the present invention;

FIG. 16 shows a simulation result of the LNA of FIG. 15;

FIG. 17 is a flow chart illustrating a multiband data receiving method, according to the present invention; and

FIG. 18 is a flow chart illustrating a multiband data transmitting method, according to the present invention.

DETAILED DESCRIPTION OF THE INVENTION

Hereinafter, embodiments of the present invention will be described in detail with reference to the appended drawings.

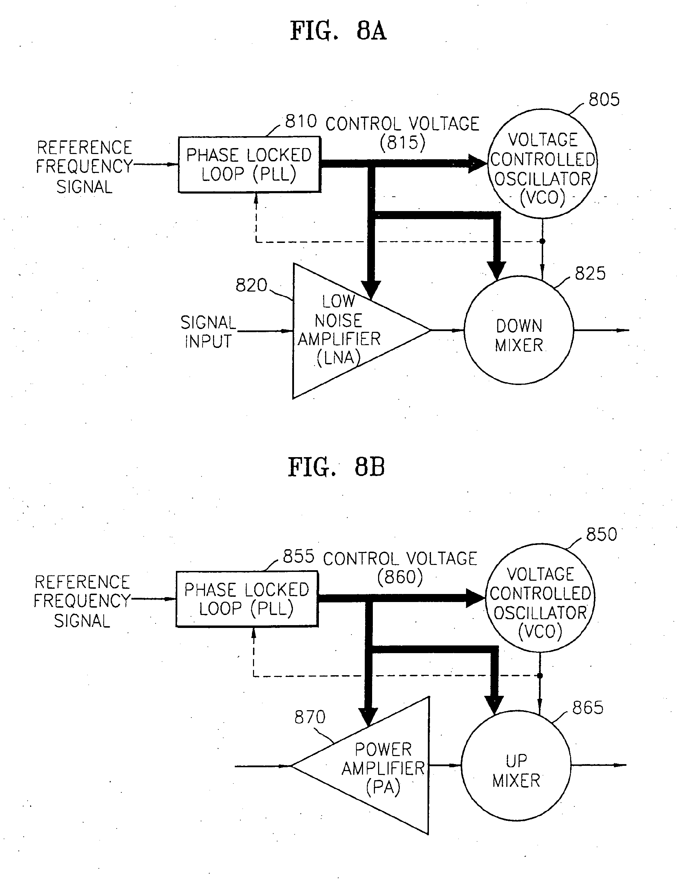

FIG. 8a is a block diagram showing the structure of a receiver having components which receive a signal output from a phase locked loop (PLL). This receiver is used in a multiband transmitting and receiving apparatus according to the present invention.

Referring to FIG. 8a, a control voltage 815 from the PLL 810 that is used for controlling an oscillation frequency of a voltage controlled oscillator (VCO) 805, is provided to different components of the receiver. The different components include a low noise amplifier (LNA) 820 and a down mixer 825. The components include a varactor (not shown) having a capacitance varies with an applied input voltage, and an inductor (not shown) having an inductance varies with an applied input voltage.

FIG. 8b is a block diagram showing the structure of a transmitter which uses an output signal from a PLL to respective components thereof, in the multiband transmitting and receiving apparatus, which operates according to the present invention.

Referring to FIG. 8b, a control voltage 860 from a PLL 855 that is used for controlling an oscillation frequency of a voltage controlled oscillator (VCO) 850, is provided to different components of the transmitter. The different components include an up mixer 865 and a power amplifier (PA) 870. The components include a varactor (not shown) having a capacitance varies with an applied input voltage, and an inductor (not shown) having an inductance varies with an applied input voltage, respectively. Accordingly, the components mentioned above are controlled according to the control voltage signal from the PLL.

The VCO 850 and PLL 855 function the same as the VCO 805 and PLL 810 shown in FIG. 8a.

That is, by installing the varactor which changes its capacitance value according to the input voltage and the inductor which changes its inductance value according to the input voltage, the LNA 820, down mixer 825, up mixer 865, and PA 870, etc. are each controlled by the control voltage received from the PLL.

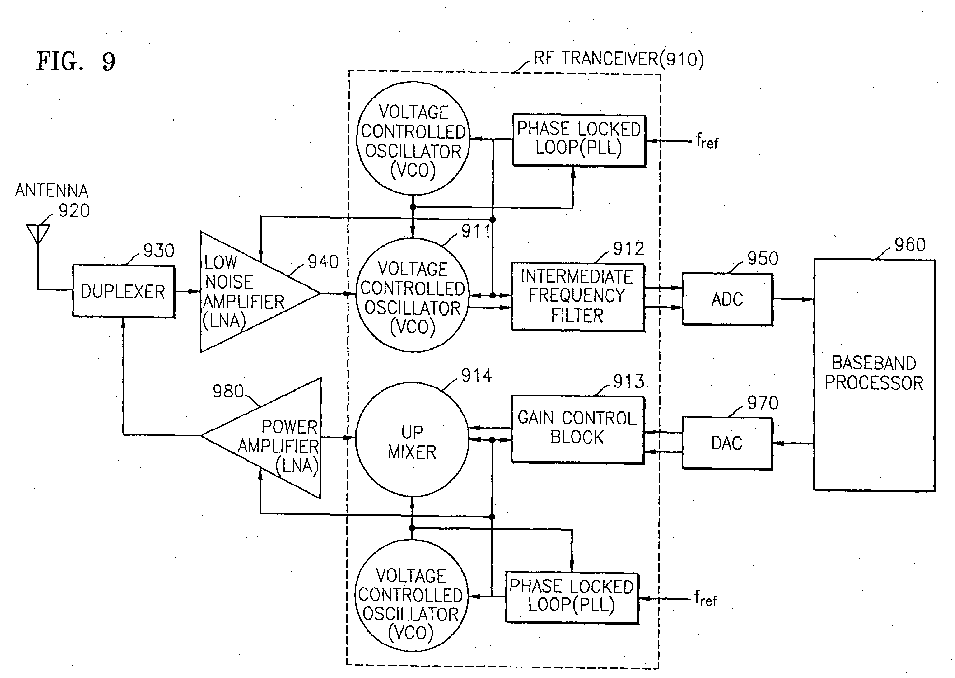

FIG. 9 is a block diagram showing the structure of a RF transmitting and receiving apparatus that uses the output signal from the PLL to various components thereof, which operates according to the present invention.

The area surrounded by dotted lines represents an RF transceiver 910 which is realized on one chip. Referring to FIG. 9, the operation of the receiver of the RF transmitting and receiving apparatus is described in detail as follows. An RF signal received through an antenna 920 is transferred to a low noise amplifier (LNA) 940 via a duplexer 930 acting as a switch. The LNA 940 amplifies the signal and transfers it to a down mixer 911.

The down mixer 911 converts the received RF signal into a low-frequency band signal. This low-frequency is called an intermediate frequency (IF). To perform the frequency conversion, a reference frequency produced by a local oscillator (LO) is needed. As shown in FIG. 9, a PLL receives a reference frequency signal and a signal output from a VCO and outputs a constant frequency signal to the VCO. The down mixer 911 receives the amplified RF signal from the LNA 940 and a signal output from the VCO and performs frequency conversion of the RF signal to output the low-frequency band signal. This low-frequency band signal is represented as Equation 1 below.

$$f_{IF} = f_{RF} - f_{LO} \qquad (1)$$

The frequency-converted signal from the down mixer 911 is sequentially passed through an intermediate frequency filter 912 and an analog-to-digital converter (ADC) 950, to be converted into a digital signal, and then transferred to a base-band processor 960.

The operation of the transmitter of the RF transmitting and receiving apparatus will now be described in detail with reference to FIG. 9. A base-band signal from the base-band processor 960 is passed through a digital-to-analog converter (DAC) 970 were it is converted into an analog signal and then output to a gain control block 913. The gain control block 913 controls the gain of the analog signal according to an amplified level. The gain control block 913, which is a filter, filters various noise components of frequencies generated during loop operation and changes the control voltage of a VCO by changing an accumulated charge quantity of a capacitor. And, a power amplifier (PA) 980 can amplify only a constant gain.

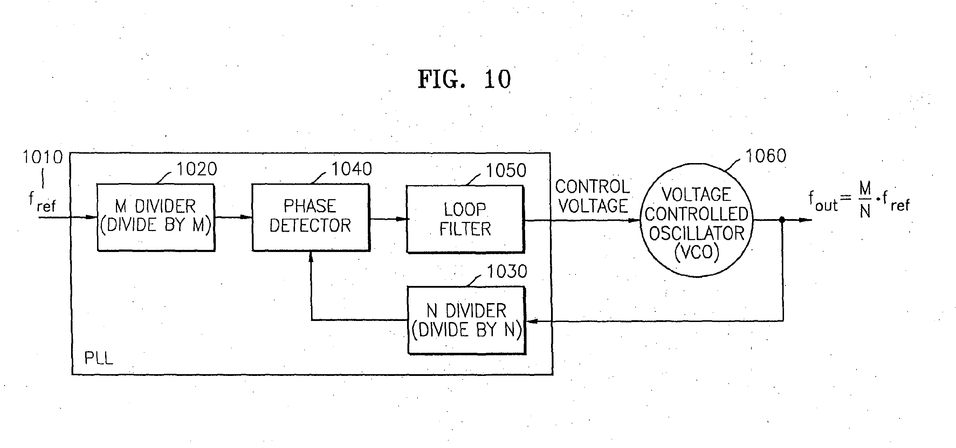

FIG. 10 is a block diagram showing the structure of a frequency synthesizer used in the present invention.

Referring to FIG. 10, a voltage controlled oscillator (VCO) 1060 outputs a frequency signal proportional to an input voltage. Also, because phase is obtained by integrating frequency with respect to time, the output phase of the VCO 1060 is controlled by adjusting the input control voltage. As a result, the VCO 1060 outputs a frequency $f_{out}$ represented by Equation 2 below.

$$f_{out} = \frac{M}{N} \cdot f_{ref} \qquad (2)$$

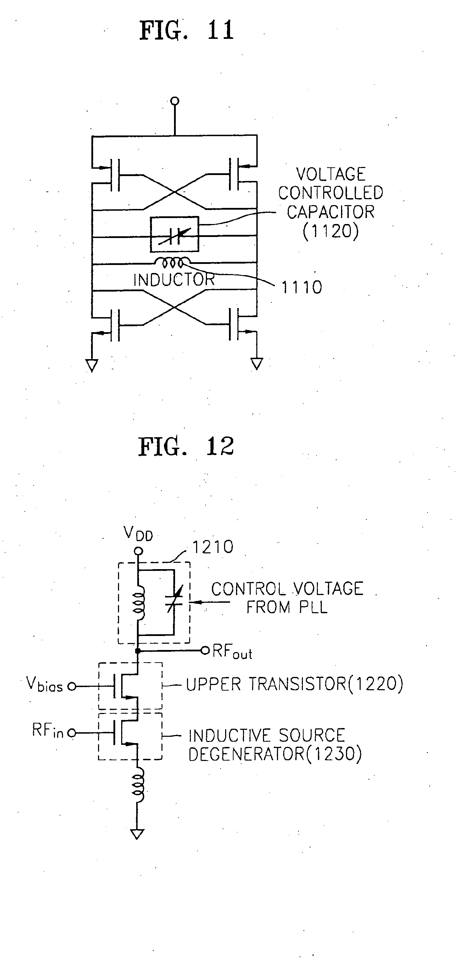

FIG. 11 is a circuit diagram of the VCO used in the present invention.

The oscillation frequency of the VCO 1060 is determined by the resonance frequency of an inductor 1110 and a capacitor 1120 which are connected in parallel. Accordingly, to change the oscillation frequency of the VCO, a varator (voltage controllable capacitor) is used as the capacitor 1120. Since the capacitance value C of the varator 1120 is changed according to an input voltage, an LC parallel resonance frequency $f_o$, which is calculated by Equation 3 below, is also changed according to the capacitance value C.

$$f_o = \frac{1}{2\pi\sqrt{LC}} \qquad (3)$$

Therefore, since the control voltage created by the PLL of FIG. 10 is input to the varator 1120 of the VCO shown in FIG. 11, the control voltage also changes the oscillation frequency of the VCO.

FIG. 12 shows the structure of the LNA used in the present invention.

Referring to FIG. 12, the LNA has a cascade structure capable of minimizing noise and uses an inductive source degenerator 1230 for impedance matching. Such an LNA shown in FIG. 12 is widely used at a frequency band of 2 - 5 GHz.

Here, to increase gain, an LC parallel resonance circuit 1210 instead of an inductive load is connected to the drain of an upper transistor 1220, and the varator having the capacitance that can be changed is used instead of a capacitor having a fixed capacitance value. Accordingly, the gain can be maximized, considering that the impedance of this resonance circuit is maximum at a specific frequency. Therefore, according to the present invention, by using a voltage controllable capacitor, that is, the varator in the resonance circuit of the LNA, and adjusting the capacitance value of the varator using the control voltage created by the PLL, the LNA can change the resonance frequency of the LC parallel resonance circuit according to the input frequency band.

That is, the LNA does not provide maximum amplification at only one frequency band of the input signal, but operates at frequency bands by changing the values of components in the resonance circuit according to the frequency range of the input signal. Here, there are two types of varactors, a MOS varactor and a junction varactor, wherein the MOS varactor has a capacitance value of 1 - 6 pF.

Also, to allow the resonance circuit to operate over a wider frequency range, two or more varactors can be interconnected in parallel in the resonance circuit, which also allows the resonance frequency to be changed within a wider frequency band.

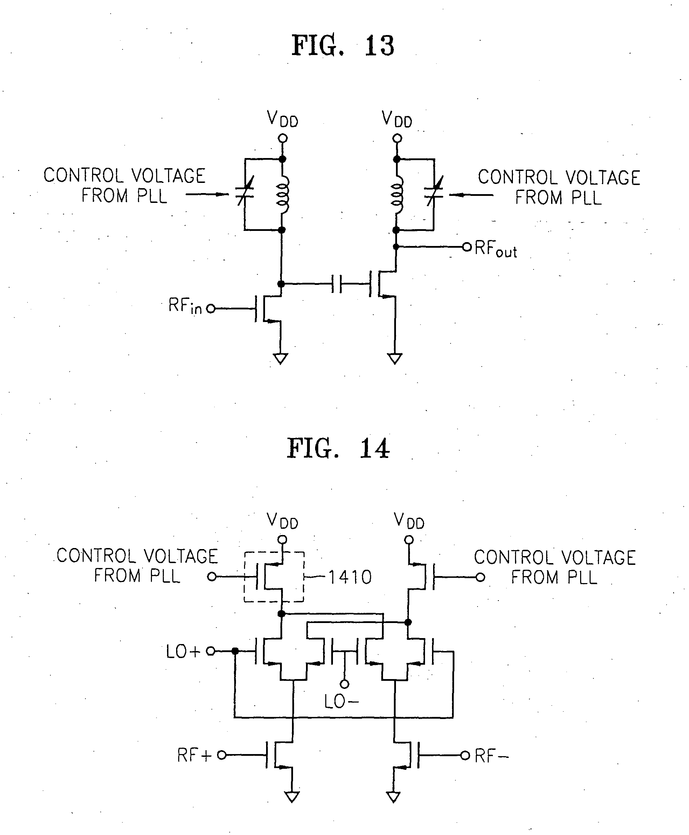

FIG. 13 shows a structure of the power amplifier (PA) used in the present invention.

The PA has a cascade structure including two or three terminals according to the desired output powers. The PA having the two-terminal cascade structure uses an LC parallel resonance circuit including a varactor to increase gain, as in the LNA. That is, like the LNA of FIG. 12, the varactor having a capacitance value that can be changed is also used in the LC parallel resonance circuit of the PA to adjust the gain according to the control voltage created by the PLL.

FIG. 14 shows the structure of a mixer used in the present invention.

The mixer of FIG. 14 is a general Gilbert-type mixer. This type of mixer can use an LC parallel resonance circuit as a load. Also, the components used in the LNA and PA as described above can be used in the mixer. That is, a varactor instead of a capacitor is used in the LC parallel resonance circuit of the mixer, and the control voltage of the PLL is used as the voltage for controlling the varactor. In FIG. 14, a transistor 1410 operates as a current source and an active device realized as a different transistor is used as a load. Conventionally, resistors are generally used as the load. However, because such a resistor has a fixed value, the resonance circuit including the resistor as the load will operate only at one frequency band. As seen in FIG. 14, the amount of current passing through the transistor 1410 can be controlled using the control voltage (generated by the PLL) applied to the gate of the transistor 1410.

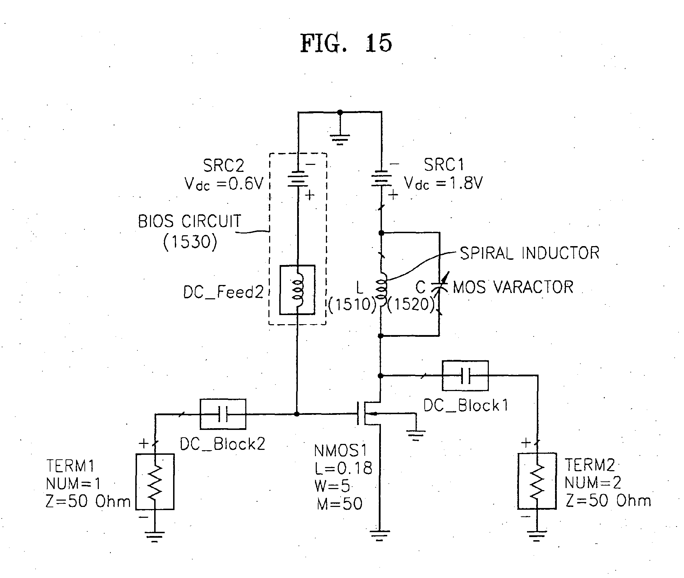

FIG. 15 is a circuit diagram showing an embodiment of the LNA used in the present invention.

FIG. 15 is a detailed circuit diagram of the LNA structure of FIG. 12, except for the upper transistor 1220. In FIG. 15, L 1510 is a spiral inductor (Dim = 300 um, Width = 10.0 um, Space = 2.0 um, and turns = 2.5), C 1520 is a MOS varactor (Width = 5.0 um, Length = 0.4 um, and Finger = 20 x 8), and the area 1530 surrounded by dotted-lines represents a bias circuit.

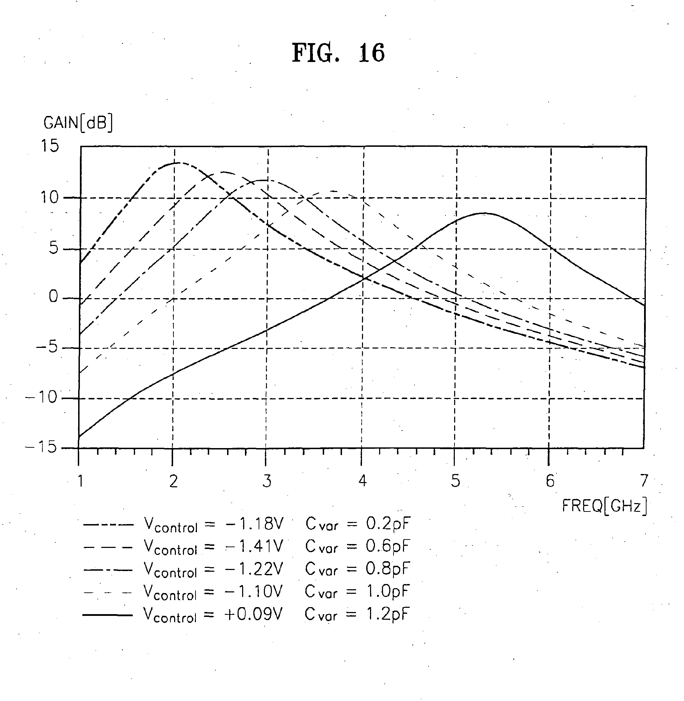

FIG. 16 shows the results of a simulation performed on the LNA of FIG. 15.

FIG. 16 shows a number of gain versus frequency curves for different $V_{control}$ and $C_{var}$ values, wherein $V_{control}$ represents the control voltage output from the PLL and $C_{var}$ is the capacitance of the varactor. As seen in FIG. 16, the capacitance of the varactor $C_{var}$ changes according to the control voltage value applied by the PLL and accordingly the frequency characteristic also changes.

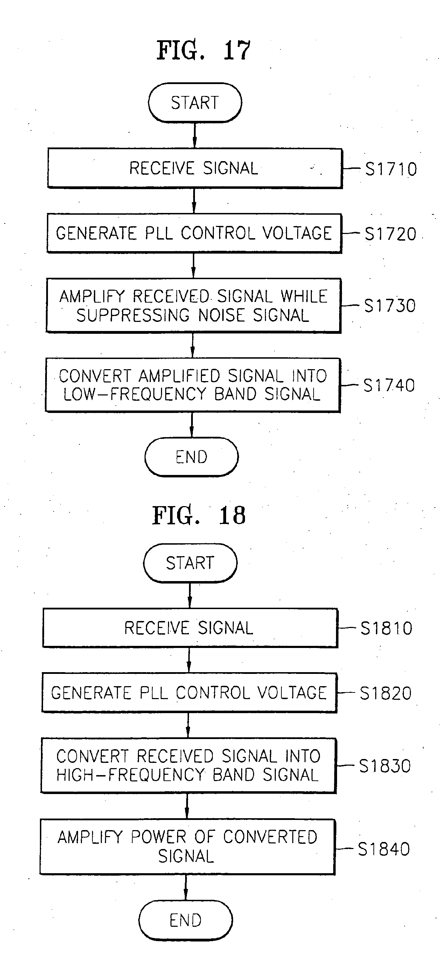

FIG. 17 is a flow chart illustrating a method of receiving data of multiple frequency bands, according to the present invention.

Referring to FIG. 17, first, a signal is received (step S1710). The PLL receives a reference frequency signal and an output signal from the VCO, and generates a control voltage for controlling an output signal from the VCO (step S1720).

Then, the LNA receives the control voltage which adjusts the operating frequency band of the LNA. The LNA operates at the adjusted frequency band and amplifies the received signal without amplifying a noise signal in the receiving signal (step S1730). The LNA includes the LC resonance circuit consisting of the inductor and the capacitor. That is, the capacitance of the capacitor in the LNA is adjusted according to the control voltage and thus the resonance frequency of the LC resonance circuit changes. This causes the operating frequency band to change.

Then, the down mixer receives the control voltage and controls an input voltage applied to the gate of the transistor operating as a source using the control voltage, to thereby adjust its operating frequency band. Then, the down mixer operates at the adjusted frequency band and converts the amplified signal into a low-frequency band signal (step S1740). The down mixer includes the plurality of transistors. The down mixer operates at least one among the plurality of transistors as a current source and at least one among the plurality of transistors as a load. Accordingly, using the control voltage, the down mixer controls the amount of current flowing from the transistor acting as the source to the transistor acting as the load, to thereby adjust its operating frequency band.

FIG. 18 is a flow chart illustrating a multiband data transmitting method, according to the present invention.

Referring to FIG. 18, first, a signal is received (step S1810). The PLL receives a reference frequency signal and an output signal from the VCO, and generates a control signal for controlling the frequency of an output signal from the VCO (step S1820).

Then, the up mixer receives the control voltage and controls the input voltage applied to the gate of the transistor using the control voltage, to thereby adjust its operating frequency band. The up mixer operates at the adjusted frequency band and converts the received signal into a high-frequency band of signal (step S1830). The up mixer includes the plurality of transistors. The up mixer operates at least one among the plurality of transistors as a current source and at least one among the plurality of transistors as a load. Accordingly, using the control signal, the up mixer controls the amount of current flowing from the transistor acting as the source to the transistor acting as the load, to adjust its operating frequency band.

Then, the power amplifier receives the control voltage to adjust the gain and amplifies the converted signal by the adjusted gain (step S1840). The power amplifier has a cascade structure including a plurality of terminals and includes the LC resonance circuit consisting of the inductor and the capacitor. The power amplifier adjusts the capacitance of the capacitor and thus changes the resonance frequency of the LC resonance circuit to thereby adjust the gain.

As described above, according to the present invention, it is possible to reduce the number of required components upon designing a multiband transmitting and receiving apparatus, and thus reduce the complexity of the circuit, by using a control voltage created by a PLL and provided to different components for controlling their operating frequency bands.

Also, it is possible to easily change the operating frequency of each component within a multiband transmitting and receiving apparatus by installing a voltage controllable capacitor as a load in the component.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. A multiband receiving apparatus comprising:

a phase locked loop which receives a reference frequency signal and a signal output from a voltage controlled oscillator and generates a control voltage for controlling the frequency of the signal output from the voltage controlled oscillator;

a low noise amplifier which receives the control voltage, operates at a frequency band that is adjusted by the control voltage, and amplifies a received signal without amplifying a noise signal in the received signal; and

a down mixer including a plurality of transistors, which receives the control voltage, controls an input voltage applied to the gate of a transistor acting as a source among the transistors, operates at a frequency band that is adjusted by the control voltage, and converts the amplified signal into a low-frequency band signal.

2. The multiband receiving apparatus of claim 1, wherein the low noise amplifier is comprised of an LC resonance circuit consisting of an inductor and a capacitor, wherein the capacitance of the capacitor is adjusted by the control voltage provided by the phase locked loop to change the resonance frequency of the LC resonance circuit.

3. The multiband receiving apparatus of claim 1, wherein the low noise amplifier has a cascade structure capable of minimizing a noise property and includes an inductive source degenerator performing impedance matching.

4. The multiband receiving apparatus of any preceding claim, wherein the down mixer has a Gilbert type structure.

5. The multiband receiving apparatus of any preceding claim, wherein the down mixer includes a plurality of transistors, at least one among the plurality of transistors operating as a current source and at least one among the plurality of transistors operating as a load, and controls the amount of current flowing from the transistor operating as the source to the transistor operating as the load, using the control voltage from the phase locked loop, to thereby adjust the operating frequency band of the multiband receiving apparatus.

6. A multiband transmitting apparatus comprising:

a phase locked loop which receives a reference frequency signal and a signal output from a voltage controlled oscillator and generates a control voltage for controlling the frequency of the signal output from the voltage controlled oscillator;

an up mixer which includes a plurality of transistors, receives the control voltage, controls an input voltage applied to a gate of a transistor operating as a source among the transistors, operates at a frequency band, and converts a transmitting signal into a high-frequency band of signal; and

a power amplifier which receives the control voltage, operates with a gain that is adjusted by the control voltage, and amplifies the converted signal by the adjusted gain.

7. The multiband transmitting apparatus of claim 6, wherein the up mixer has a Gilbert type structure.

8. The multiband transmitting apparatus of claim 6 or 7, wherein the up mixer includes a plurality of transistors, at least one among the plurality of transistors operating as a current source and at least one among the plurality of transistors operating as a load, and controls the amount of current flowing from the transistor operating as the source to the transistor operating as the load, using the control voltage from the phase locked loop, to adjust the operating frequency band.

9. The multiband transmitting apparatus of any one of claims 6 to 8, wherein the power amplifier has a cascade structure including a plurality of terminals, and includes an LC resonance circuit consisting of an inductor and a capacitor, wherein the capacitance to the capacitor is adjusted using the control voltage provided by the phase locked loop to change the resonance frequency of the LC resonance circuit, to adjust the gain of the power amplifier.

10. A multiband transmitting and receiving apparatus comprising:

a phase locked loop which receives a reference frequency signal and a signal output from a voltage controlled oscillator and generates a control voltage for controlling the frequency of the signal output from the voltage controlled oscillator;

a low noise amplifier which receives the control voltage, operates at a frequency band that is adjusted by the control voltage, and amplifies a received signal without amplifying a noise signal in the receiving signal;

a down mixer including a plurality of transistors, which receives the control voltage, controls an input voltage applied to the gate of a transistor acting as a source among the transistors, operates at a frequency band that is adjusted by the control voltage, and converts the amplified signal into a low-frequency band signal;

an up mixer including a plurality of transistors, which receives the control voltage, controls an input voltage applied to the gate of a transistor acting as a source among the transistors, operates at a frequency band that is adjusted by the control voltage, and converts a transmitting signal into a high-frequency band signal; and

a power amplifier which receives the control voltage, operates with a gain that is adjusted by the control voltage and amplifies the converted signal by the adjusted gain.

**11.** A low noise amplifier used in an RF transceiver, comprising:

a phase locked loop which receives a reference frequency signal and a signal output from a voltage controlled oscillator and generates a control voltage for controlling the frequency of the signal output from the voltage controlled oscillator; and

an LC resonance circuit consisting of an inductor and a capacitor,

wherein the capacitance of the capacitor is adjusted using the control voltage provided by the phase locked loop to thereby change the resonance frequency of the LC resonance circuit.

**12.** A power amplifier used in an RF transceiver, comprising:

a phase locked loop which receives a reference frequency signal and a signal output from a voltage controlled oscillator and generates a control voltage for controlling the frequency of the signal output from the voltage controlled oscillator; and

an LC resonance circuit which has a cascade structure including a plurality of terminals and consists of an inductor and a capacitor,

wherein the capacitance of the capacitor is adjusted using the control voltage provided by the phase locked loop to thereby change the resonance frequency of the LC resonance circuit and adjust the gain of the power amplifier.

**13.** A mixer used in an RF transceiver, comprising:

a phase locked loop which receives a reference frequency signal and a signal output from a voltage controlled oscillator and generates a control signal for controlling the frequency of the signal output from the voltage controlled oscillator; and

a plurality of transistors,

wherein at least one among the plurality of transistors operates as a current source, at least one among the plurality of transistors operates as a load, and the amount of current flowing from the transistor operating as the source to the transistor operating as the load is controlled using the control voltage from the phase locked loop.

**14.** A data receiving method, which is implemented on multiple frequency bands, comprising:

(a) receiving a signal;

(b) receiving a reference frequency signal and a signal output from a voltage controlled oscillator and controlling a control voltage which controls the frequency of the signal output from the voltage controlled oscillator;

(c) receiving the control voltage, adjusting an operating frequency band, operating at the adjusted frequency band, and amplifying a received signal without amplifying a noise signal in the received signal; and

(d) receiving the control voltage, controlling an input voltage applied to a gate of a transistor operating as a source using the control voltage to adjust an operating frequency band, operating at the adjusted frequency band, and converting the amplified signal into a low-frequency band signal.

**15.** The data receiving method of claim 14, wherein (c) comprises:

in a low noise amplifier including an LC resonance circuit consisting of an inductor and a capacitor, adjusting a capacitance value of the capacitor using the control voltage, and changing the resonance frequency of the LC resonance circuit to adjust the operating frequency band of the low noise amplifier.

**16.** The data receiving method of claim 14 or 15, wherein (d) comprises:

in a down mixer including a plurality of transistors, wherein at least one among the plurality of transistors operates as a current source and at least one among the plurality of transistors operates as a load, controlling the amount of current flowing from the transistor operating as the source to the transistor operating as the load, using the control voltage, to adjust the operating frequency band of the down mixer.

17. A data transmitting method, which is implemented on multiple frequency bands, comprising:

(a) receiving a signal;
(b) receiving a reference frequency signal and a signal output from a voltage controlled oscillator and generates a control voltage which controls the frequency of the signal output from the voltage controlled oscillator;
(c) receiving the control voltage, controlling an input voltage applied to a gate of a transistor operating as a source using the control voltage to adjust an operating frequency band, operating at the adjusted frequency band, and converting the received signal into a high-frequency band signal; and
(d) receiving the control voltage to adjust the gain and amplifying the converted signal by the adjusted gain.

18. The data transmitting method of claim 17, wherein (c) comprises:

in an up mixer including a plurality of transistors, wherein at least one among the plurality of transistors operates as a current source and at least one among the plurality of transistors operates as a load, controlling the amount of current flowing from the transistor operating as the source to the transistor operating as the load, using the control voltage, to adjust the operating frequency band.

19. The data transmitting method of claim 17 or 18, wherein (d) comprises:

in a power amplifier which has a cascade structure including a plurality of terminals and includes an LC resonance circuit consisting of an inductor and a capacitor, controlling the capacitance of the capacitor using the control voltage and changing the resonance frequency of the LC resonance circuit to thereby control the gain of the power amplifier.

FIG. 1

I/Q QUADRATURE MIXER

I

Q

1.06GHz(I)

1.06GHz(Q)

LNA

BALUN

÷ 4

LO

4.24GHz

SWITCH

BPF

ANTENNA

I/Q QUADRATURE MIXER

I

Q

5.3GHz(I)

5.3GHz(Q)

SUBTRACTOR

PA

BALUN

# FIG. 2

FIG. 3

# FIG. 4

MULTIPLE SWITCH

RECEIVING MEAN

LNA

FILTER

FILTER

FILTER

MIXER

IF FILTER

FREQUENCY SYNTHESIZER

CONTROLLER

FIG. 5

# FIG. 6

# FIG. 7

## FIG. 8A

REFERENCE FREQUENCY SIGNAL → PHASE LOCKED LOOP (PLL) 810 — CONTROL VOLTAGE (815) → VOLTAGE CONTROLLED OSCILLATOR (VCO) 805

820 — SIGNAL INPUT → LOW NOISE AMPLIFIER (LNA) → DOWN MIXER 825

## FIG. 8B

REFERENCE FREQUENCY SIGNAL → PHASE LOCKED LOOP (PLL) 855 — CONTROL VOLTAGE (860) → VOLTAGE CONTROLLED OSCILLATOR (VCO) 850

870 — POWER AMPLIFIER (PA) → UP MIXER 865

**FIG. 9**

RF TRANCEIVER(910)

VOLTAGE CONTROLLED OSCILLATOR (VCO)

PHASE LOCKED LOOP(PLL) ← $f_{ref}$

911

VOLTAGE CONTROLLED OSCILLATOR (VCO)

912

INTERMEDIATE FREQUENCY FILTER

950

ADC

960

BASEBAND PROCESSOR

ANTENNA 920

930 DUPLEXER

LOW NOISE AMPLIFIER (LNA) 940

980 POWER AMPLIFIER (LNA)

914 UP MIXER

913 GAIN CONTROL BLOCK

970 DAC

VOLTAGE CONTROLLED OSCILLATOR (VCO)

PHASE LOCKED LOOP(PLL) ← $f_{ref}$

EP 1 396 942 A2

17

FIG. 10

$$f_{out} = \frac{M}{N} \cdot f_{ref}$$

1060

VOLTAGE CONTROLLED OSCILLATOR (VCO)

CONTROL VOLTAGE

1050 — LOOP FILTER

1030 — N DIVIDER (DIVIDE BY N)

1040 — PHASE DETECTOR

1020 — M DIVIDER (DIVIDE BY M)

1010 — $f_{ref}$

PLL

18

## FIG. 11

VOLTAGE
CONTROLLED
CAPACITOR
(1120)

INDUCTOR — 1110

## FIG. 12

$V_{DD}$

1210

CONTROL VOLTAGE
FROM PLL

$RF_{out}$

$V_{bias}$ — UPPER TRANSISTOR(1220)

$RF_{in}$ — INDUCTIVE SOURCE
DEGENERATOR(1230)

# FIG. 13

CONTROL VOLTAGE
FROM PLL →

$V_{DD}$    $V_{DD}$

← CONTROL VOLTAGE
FROM PLL

○$RF_{out}$

$RF_{in}$○

# FIG. 14

CONTROL VOLTAGE
FROM PLL ○

$V_{DD}$    $V_{DD}$

1410

CONTROL VOLTAGE
FROM PLL

LO+ ○

LO−

RF+ ○

○ RF−

# FIG. 15

## FIG. 16

GAIN[dB] vs FREQ[GHz]

Legend:
- ── ── $V_{control} = -1.18V$  $C_{var} = 0.2pF$
- ─ ─ ─ $V_{control} = -1.41V$  $C_{var} = 0.6pF$
- ─·─ $V_{control} = -1.22V$  $C_{var} = 0.8pF$
- ─··─ $V_{control} = -1.10V$  $C_{var} = 1.0pF$
- ──── $V_{control} = +0.09V$  $C_{var} = 1.2pF$

# FIG. 17

START

RECEIVE SIGNAL —— S1710

GENERATE PLL CONTROL VOLTAGE —— S1720

AMPLIFY RECEIVED SIGNAL WHILE SUPPRESSING NOISE SIGNAL —— S1730

CONVERT AMPLIFIED SIGNAL INTO LOW-FREQUENCY BAND SIGNAL —— S1740

END

# FIG. 18

START

RECEIVE SIGNAL —— S1810

GENERATE PLL CONTROL VOLTAGE —— S1820

CONVERT RECEIVED SIGNAL INTO HIGH-FREQUENCY BAND SIGNAL —— S1830

AMPLIFY POWER OF CONVERTED SIGNAL —— S1840

END